# EUROPÄISCHE PATENTSCHRIFT

(11) **EP 4 039 883 B1**
(45) Veröffentlichungstag und Bekanntmachung des Hinweises auf die Patenterteilung: **05.07.2023**
(21) Anmeldenummer: 21155382.1
(22) Anmeldetag: 05.02.2021
(51) Int. Cl.: E01C 19/48

(54) **PLAUSIBILISIERUNG EINES EINBAUDATENSATZES FÜR EINE STRASSENBAUMASCHINE**
PLAUSIBILITY CHECK OF AN INSTALLATION DATA SET FOR A ROAD CONSTRUCTION MACHINE
PLAUSIBILISATION D'UN ENSEMBLE DE DONNÉES D'INSTALLATION POUR UN ENGIN DE CONSTRUCTION ROUTIÈRE

(43) Veröffentlichungstag der Anmeldung: 10.08.2022
(73) Patentinhaber: Joseph Vögele AG, 67067 Ludwigshafen (DE)
(72) Erfinder: Buschmann, Martin, 67435 Neustadt (DE)
(74) Vertreter: Grünecker Patent- und Rechtsanwälte PartG mbB

(56) Entgegenhaltungen:
- EP-A1- 1 754 831
- CN-A- 111 563 651
- US-A1- 2015 275 482

## Beschreibung

Die Erfindung betrifft das Gebiet des Straßenbaus mittels Straßenbaumaschinen, insbesondere mittels eines Straßenfertigers.

Insbesondere bei komplexen Baustellen kann es vorteilhaft sein, für den Einbau eines Fahrbahnbelags relevante Daten in digitaler Form bereitzustellen. Die digitalen Daten können beispielsweise den einzubauenden Fahrbahnbelag oder Einstellungen für eine oder mehrere Straßenbaumaschinen definieren, wie in US 2015/275482 A beschrieben.

Unter Zuhilfenahme solcher digitalen Daten kann die Arbeit der Bediener der Straßenbaumaschine vereinfacht werden. Die Daten können beispielsweise vorab in einem Planungsprozess erstellt und dann in einen Bordcomputer der Straßenbaumaschine eingelesen werden. Die Daten können unter anderem für eine zumindest teilweise Automatisierung des Einbauvorgangs herangezogen werden. Das Zurückgreifen auf in einem Planungsprozess erstellte digitale Daten während des Einbauvorgangs kann eine Planbarkeit und Reproduzierbarkeit des Einbauvorgangs verbessern.

In der Praxis kann es vorkommen, dass erst während des laufenden Einbauvorgangs festgestellt wird, dass eine Straßenbaumaschine aufgrund ihrer Konfiguration nicht in der Lage ist, den geplanten Einbauvorgang entsprechend den Vorgaben oder tatsächlichen Gegebenheiten durchzuführen. Dies kann beispielsweise zur Folge haben, dass der Einbauvorgang abgebrochen werden muss und erst nach einem Umrüsten der Straßenbaumaschine oder einem Bereitstellen einer anderen Straßenbaumaschine fortgesetzt werden kann. Hierdurch können erhebliche Verzögerungen im Betriebsablauf entstehen. Besonders problematisch kann ein erzwungener Abbruch einer Einbaufahrt eines Straßenfertigers sein, da dieser beispielsweise Unregelmäßigkeiten in dem eingebauten Fahrbahnbelag zur Folge haben kann und sich so negativ auf die Qualität der Fahrbahn auswirken kann.

Es ist Aufgabe der Erfindung, ein Verfahren zum Einbau eines Fahrbahnbelags mit einer Straßenbaumaschine bereitzustellen, welches in Bezug auf einen reibungslosen Betriebsablauf und eine Einbauqualität verbessert ist.

Diese Aufgabe wird durch den Gegenstand von Anspruch 1 gelöst. Die abhängigen Ansprüche geben vorteilhafte Ausführungsformen an.

Gemäß einem Aspekt betrifft die Erfindung ein Verfahren zum Einbau eines Fahrbahnbelags. Es wird ein Einbaudatensatz in einen Bordcomputer einer Straßenbaumaschine eingelesen. Während eines Einbauvorgangs werden Arbeitskomponenten der Straßenbaumaschine zum Einbau des Fahrbahnbelags basierend auf dem eingelesenen Einbaudatensatz angesteuert. Der Einbaudatensatz wird vor Beginn des Einbauvorgangs mittels einer Recheneinheit mit einem Eigenschaftsprofil der Straßenbaumaschine abgeglichen. Das Eigenschaftsprofil ist in einem Profilspeicher gespeichert. Ebenfalls vor Beginn des Einbauvorgangs wird basierend auf einem Ergebnis des Abgleichs beurteilt, ob die Straßenbaumaschine zum Einbau des Fahrbahnbelags geeignet ist.

Durch das Abgleichen des Einbaudatensatzes mit dem Eigenschaftsprofil der Straßenbaumaschine können Inkompatibilitäten zwischen dem Einbaudatensatz, basierend auf welchem später die Arbeitskomponenten der Straßenbaumaschine zum Einbau des Fahrbahnbelags angesteuert werden, und der verwendeten Straßenbaumaschine bereits vor Beginn des Einbauvorgangs erkannt werden. Wenn sich aus dem Abgleich ergibt, dass die Straßenbaumaschine nicht zum Einbau des Fahrbahnbelags geeignet ist, kann vor Beginn des Einbauvorgangs entsprechend reagiert werden, beispielsweise durch Verwendung einer anderen Straßenbaumaschine, durch Umrüsten der Straßenbaumaschine, und/oder durch Anpassen des Einbaudatensatzes. Ein Unterbrechen eines bereits begonnenen Einbauvorgangs kann so in bestimmten Fällen verhindert werden.

Die Straßenbaumaschine kann als Straßenbaufahrzeug ausgebildet sein und/oder einen eigenen Fahrantrieb aufweisen.

Gemäß einer bevorzugten Ausführungsform handelt es sich bei der Straßenbaumaschine um einen Straßenfertiger. Die Erfindung kann aber auch auf andere Straßenbaumaschinen angewendet werden, wie zum Beispiel auf einen Grader, eine Fräse oder eine Walze. Die Fräse kann als Fräsfahrzeug zum Abtragen eines bereits eingebauten Fahrbahnbelags oder eines Teils davon ausgebildet sein.

Der Einbauvorgang umfasst den Betrieb der Straßenbaumaschine zum Einbau des Fahrbahnbelags. Wenn es sich bei der Straßenbaumaschine um einen Straßenfertiger handelt, kann der Einbauvorgang das Verlegen des Fahrbahnbelags umfassen. Das Verlegen des Fahrbahnbelags muss aber nicht zwingend von der Straßenbaumaschine selbst durchgeführt werden. Beispielsweise kann der Einbauvorgang ein Vorbereiten des Planums für das Verlegen des Fahrbahnbelags oder ein Nachbereiten des verlegten Fahrbahnbelags umfassen. Wenn die Straßenbaumaschine als eine Fräse ausgebildet ist, kann der Einbauvorgang ein Abtragen eines zuvor auf dem Planum vorgesehenen Fahrbahnbelags mit der Fräse umfassen. Wenn die Straßenbaumaschine als ein Grader ausgebildet ist, kann der Einbauvorgang ein Herstellen oder Begradigen des Planums mit dem Grader umfassen. Wenn die Straßenbaumaschine als eine Walze ausgebildet ist, kann der Einbauvorgang ein Verdichten des verlegten Fahrbahnbelags mit der Walze umfassen.

Der Einbaudatensatz liegt vorzugsweise in digitaler Form vor. Ein digitaler Einbaudatensatz kann beispielsweise mittels einer Planungssoftware erstellt werden. Ein digitaler Einbaudatensatz lässt sich einfach und effizient an den jeweiligen Verwendungsort übermitteln, beispielsweise durch drahtlose oder kabelgebundene Datenübertragung oder mittels eines mobilen Datenspeichers, wie beispielsweise einer Speicherkarte, einer CD, einer Diskette, einem USB-Stick, einer Festplatte, oder einer SSD.

Das Eigenschaftsprofil der Straßenbaumaschine kann als Datensatz in digitaler Form vorliegen. Das Eigenschaftsprofil der Straßenbaumaschine kann Informationen zu Eigenschaften und Kennzahlen der Straßenbaumaschine umfassen. Das Eigenschaftsprofil der Straßenbaumaschine kann Informationen zu einer Maschinenspezifikation der Straßenbaumaschine umfassen. Das Eigenschaftsprofil der Straßenbaumaschine kann Angaben umfassen, welche definieren, welche Fahrbahnbeläge mit dem Straßenfertiger einbaubar sind. Das Eigenschaftsprofil der Straßenbaumaschine kann obere und/oder untere Grenzwerte für eine Einstellung eines oder mehrerer Betriebsparameter der Straßenbaumaschine angeben.

Das Eigenschaftsprofil der Straßenbaumaschine kann beispielsweise eine oder mehrere der folgenden Informationen angeben: eine kleinstmögliche (minimale) Arbeitsbreite der Straßenbaumaschine, eine größtmögliche (maximale) Arbeitsbreite der Straßenbaumaschine, eine maximale Verstellgeschwindigkeit der Arbeitsbreite der Straßenbaumaschine, eine maximale Einbaugeschwindigkeit der Straßenbaumaschine, eine maximale Fördermenge von Einbaumaterial in der Straßenbaumaschine pro Zeiteinheit, eine maximal erreichbare Verdichtung des Einbaumaterials durch die Straßenbaumaschine, eine kleinstmögliche (minimale) Einbaustärke bei Verwendung der Straßenbaumaschine, eine größtmögliche (maximale) Einbaustärke bei Verwendung der Straßenbaumaschine.

Das Eigenschaftsprofil eines Straßenfertigers kann sich auf einen Straßenfertiger als Kombination aus Zugfahrzeug und Einbaubohle beziehen. Wird die Bohlenkonfiguration des Straßenfertigers geändert oder die Einbaubohle ausgetauscht, kann ein anderes Eigenschaftsprofil verwendet werden.

Das Abgleichen des Einbaudatensatzes mit dem Eigenschaftsprofil der Straßenbaumaschine durch die Recheneinheit kann gemäß Regeln erfolgen. Bei den Regeln kann es sich um deterministische Regeln handeln. Die Regeln können vordefiniert sein. Die Regeln können in einem Regelspeicher gespeichert sein. Die Regeln können in digitaler Form gespeichert sein.

Das Abgleichen des Einbaudatensatzes mit dem Eigenschaftsprofil der Straßenbaumaschine kann ein Ermitteln zumindest eines Vergleichswerts aus dem Einbaudatensatz umfassen. Die Regeln können definieren, wie der zumindest eine Vergleichswert aus dem Einbaudatensatz ermittelt wird. Der zumindest eine Vergleichswert kann einem Wert entsprechen, der in dem Einbaudatensatz enthalten ist. Der zumindest eine Vergleichswert kann aus einem oder mehreren Werten des Einbaudatensatzes berechnet werden. Der zumindest eine Vergleichswert kann unabhängig von dem Eigenschaftsprofil der Straßenbaumaschine ermittelt werden.

Vorzugsweise wird der zumindest eine Vergleichswert mit dem Eigenschaftsprofil der Straßenbaumaschine abgeglichen. Die Regeln können definieren, wie der zumindest eine Vergleichswert mit dem Eigenschaftsprofil der Straßenbaumaschine abgeglichen wird. Vorzugsweise wird der zumindest eine Vergleichswert mit einem in dem Eigenschaftsprofil der Straßenbaumaschine enthaltenen Eigenschaftswert verglichen. Der Eigenschaftswert kann ein Grenzwert sein.

Alternativ zum Abgleichen des Einbaudatensatzes mit dem Eigenschaftsprofil der Straßenbaumaschine gemäß Regeln kann das Abgleichen des Einbaudatensatzes mit dem Eigenschaftsprofil der Straßenbaumaschine mittels einer Simulation erfolgen. Die Simulation kann ein Simulieren des Einbauvorgangs des Fahrbahnbelags mit der Straßenbaumaschine und entsprechend dem Einbaudatensatz umfassen. Die Simulation kann zur Beschreibung der Straßenbaumaschine auf das Eigenschaftsprofil der Straßenbaumaschine zurückgreifen.

Als Ergebnis der Simulation kann festgestellt werden, ob der simulierte Einbauvorgang erfolgreich war. Beispielsweise kann der simulierte Einbauvorgang als erfolgreich bestimmt werden, wenn während des simulierten Einbauvorgangs keine Fehler aufgetreten sind und/oder der in der Simulation eingebaute Fahrbahnbelag oder das in der Simulation erstellte Planum den Vorgaben entspricht. Die Vorgaben können insbesondere aus dem Einbaudatensatz hervorgehen. Wenn bestimmt wird, dass der simulierte Einbauvorgang erfolgreich war, kann bestimmt werden, dass die Straßenbaumaschine zum Einbau des Fahrbahnbelags geeignet ist. Andernfalls kann bestimmt werden, dass die Straßenbaumaschine zum Einbau des Fahrbahnbelags nicht geeignet ist.

Die Simulation kann einen Digital Twin der Straßenbaumaschine verwenden.

Im Fall eines Straßenfertigers können die Arbeitskomponenten eines oder mehreres von Folgendem umfassen: einen Fahrantrieb des Straßenfertigers, einen Stampfer einer Einbaubohle des Straßenfertigers, eine Pressleiste einer Einbaubohle des Straßenfertigers, eine Bohlenheizung des Straßenfertigers, eine Mischguttransporteinrichtung, eine Anordnung zum Verstellen der Arbeitsbreite der Einbaubohle.

Die Arbeitskomponenten der Straßenbaumaschine können basierend auf dem in den Bordcomputer der Straßenbaumaschine eingelesenen Einbaudatensatz automatisch angesteuert werden. Das automatische Ansteuern kann durch den Bordcomputer oder eine Steuereinheit der Straßenbaumaschine erfolgen. Ein automatisches Ansteuern der Arbeitskomponenten der Straßenbaumaschine basierend auf dem eingelesenen Einbaudatensatz kann dazu führen, dass der Fahrbahnbelag genau entsprechend dem Einbaudatensatz eingebaut wird. Ein automatisches Ansteuern der Arbeitskomponenten der Straßenbaumaschine kann die Bedienung der Straßenbaumaschine während des Einbauvorgangs erleichtern.

Die Arbeitskomponenten der Straßenbaumaschine können basierend auf dem eingelesenen Einbaudatensatz manuell angesteuert werden. Beispielsweise kann basierend auf dem eingelesenen Einbaudatensatz eine Information an einer Anzeigeeinrichtung der Straßenbaumaschine angezeigt werden. Basierend auf der angezeigten Information kann ein Bediener die Arbeitskomponenten der Straßenbaumaschine steuern. Ein manuelles Ansteuern der Arbeitskomponenten der Straßenbaumaschine lässt dem Bediener eine gewisse Freiheit. Da das Ansteuern aber basierend auf dem in dem Bordcomputer der Straßenbaumaschine eingelesenen Einbaudatensatz erfolgt, kann dennoch zumindest zu einem gewissen Grade ein der Planung entsprechendes Einbauergebnis sichergestellt werden.

Es ist denkbar, dass bestimmte Arbeitskomponenten automatisch angesteuert werden und andere Arbeitskomponenten manuell angesteuert werden.

Es ist denkbar, dass bestimmte Arbeitskomponenten basierend auf dem eingelesenen Einbaudatensatz angesteuert werden (automatisch oder manuell) und andere Arbeitskomponenten unabhängig von dem eingelesenen Einbaudatensatz angesteuert werden (automatisch oder manuell). Alternativ könnten sämtliche Arbeitskomponenten der Straßenbaumaschine basierend auf dem eingelesenen Einbaudatensatz angesteuert werden.

Der Einbaudatensatz kann einen Solldatensatz umfassen, welcher den einzubauenden Fahrbahnbelag charakterisiert. Durch eine Berücksichtigung des Solldatensatzes beim Abgleich mit dem Eigenschaftsprofil der Straßenbaumaschine lässt sich speziell für den im konkreten Fall einzubauenden Fahrbahnbelag feststellen, ob die Straßenbaumaschine zum Einbau des Fahrbahnbelags geeignet ist. Wenn beim Ansteuern der Arbeitskomponenten der Straßenbaumaschine der Solldatensatz berücksichtigt wird, können die Arbeitskomponenten der Straßenbaumaschine entsprechend den Vorgaben des einzubauenden Fahrbahnbelags angesteuert werden.

Der Solldatensatz kann zumindest teilweise auf zumindest einem von Folgendem basierend erstellt werden: einem Vermessungsprozess, einem Konstruktionsprozess, Kartendaten (z.B. digitale oder nicht-digitale Landkarten), Daten aus einem Navigationssystem (z.B. Google-Maps), Landschaftsbilder (z.B. Luftaufnahmen oder Baustellenfotos). Der Solldatensatz kann in einer Planungsphase des Bauvorhabens erstellt werden. Der Solldatensatz kann vor Beginn des Einbauvorgangs erstellt werden.

Der Solldatensatz kann zumindest eines von Folgendem definieren: eine Geometrie des einzubauenden Fahrbahnbelags, zumindest eine Eigenschaft des Einbaumaterials, zumindest eine Qualitätsanforderung an den Fahrbahnbelag.

Die Geometrie des einzubauenden Fahrbahnbelags kann beispielsweise eines oder mehreres von Folgendem umfassen: eine Lage des Fahrbahnbelags, eine Breite des Fahrbahnbelags, eine Stärke des Fahrbahnbelags, eine Neigung des Fahrbahnbelags. Die zumindest eine Eigenschaft des Einbaumaterials kann beispielsweise eines oder mehreres von Folgendem umfassen: eine Art des Einbaumaterials, eine Zusammensetzung des Einbaumaterials, eine Temperatur des Einbaumaterials. Die zumindest eine Qualitätsanforderung an den Fahrbahnbelag kann beispielsweise eines oder mehreres von Folgendem umfassen: einen minimalen Verdichtungsgrad des Einbaumaterials in dem Fahrbahnbelag, eine maximale Unebenheit einer Oberfläche des Fahrbahnbelags.

Der Einbaudatensatz kann einen Parametersatz mit Einstellungen von Betriebsparametern der Straßenbaumaschine umfassen. Wenn der Parametersatz bei dem Abgleich des Einbaudatensatzes mit dem Eigenschaftsprofil der Straßenbaumaschine berücksichtigt wird, kann vor Einbaubeginn festgestellt werden, ob die Straßenbaumaschine für den Einsatz mit den Einstellungen aus dem Parametersatz ausgelegt ist.

Im Falle eines Straßenfertigers kann der Parametersatz eine Einstellung für einen oder mehrere der folgenden Betriebsparameter umfassen: eine Einbaugeschwindigkeit des Straßenfertigers, einen Hub eines Stampfers einer Einbaubohle des Straßenfertigers, eine Drehzahl eines Stampfers einer Einbaubohle des Straßenfertigers, einen Vibrationsdruck, eine Vibrationsdrehzahl, einen Pressleistendruck, eine Pressleistenfrequenz, eine Temperatur einer Einbaubohle des Straßenfertigers, einen Anstellwinkel einer Einbaubohle des Straßenfertigers, eine Ausziehbreite einer Einbaubohle des Straßenfertigers, eine Mischguttemperatur, einen Mischguttransportparameter.

Die Recheneinheit kann auf der Straßenbaumaschine vorgesehen sein. Die Recheneinheit kann Teil des Bordcomputers der Straßenbaumaschine sein. Die Recheneinheit kann mit dem Bordcomputer der Straßenbaumaschine in Kommunikationsverbindung stehen. Beim Einlesen des Einbaudatensatzes in den Bordcomputer der Straßenbaumaschine kann der Einbaudatensatz der Recheneinheit zur Verfügung gestellt werden. Wenn die Recheneinheit auf der Straßenbaumaschine vorgesehen ist, lässt sich das Abgleichen des Einbaudatensatzes mit dem Eigenschaftsprofil der Straßenbaumaschine beispielsweise direkt vor Beginn des Einbauvorgangs auf der Baustelle durchführen, sozusagen als letzter Plausibilitätscheck.

Die Recheneinheit kann separat von der Straßenbaumaschine vorgesehen sein. Beispielsweise kann die Recheneinheit in einer Planungszentrale oder in einem Rechenzentrum vorgesehen sein. Die Recheneinheit könnte als Server ausgebildet sein oder Teil eines Servers sein. Die Recheneinheit könnte auf einem mobilen Gerät implementiert sein, wie beispielsweise einem Notebook, einem Tablet oder einem Smartphone. Wenn die Recheneinheit separat von der Straßenbaumaschine vorgesehen ist, kann der Abgleich zwischen dem Einbaudatensatz und dem Eigenschaftsprofil der Straßenbaumaschine auch ohne Zugang zu der Straßenbaumaschine durchgeführt werden. Beispielsweise könnte der Abgleich als Vorabprüfung durchgeführt werden, insbesondere im Büro.

Der Profilspeicher kann auf der Straßenbaumaschine vorgesehen sein. Vorzugsweise ist der Profilspeicher dann auf der Straßenbaumaschine vorgesehen, wenn auch die Recheneinheit auf der Straßenbaumaschine vorgesehen ist.

Der Profilspeicher könnte separat von der Straßenbaumaschine vorgesehen sein. Vorzugsweise ist der Profilspeicher dort vorgesehen, wo auch die Recheneinheit vorgesehen ist.

Das Verfahren kann das Vorgeben eines Typs der Straßenbaumaschine umfassen. Beispielsweise kann ein Typ der Straßenbaumaschine mittels einer Eingabevorrichtung ausgewählt werden. Wenn die Erfindung auf einen Straßenfertiger angewandt wird, umfasst das Vorgeben eines Typs der Straßenbaumaschine das Vorgeben eines Typs des Straßenfertigers. Die Vorgabe des Typs des Straßenfertigers kann beispielsweise eine Auswahl einer Kombination aus Zugfahrzeug und Einbaubohle umfassen. Wenn die Erfindung auf einen Grader angewandt wird, umfasst das Vorgeben eines Typs der Straßenbaumaschine das Vorgeben eines Typs des Graders. Wenn die Erfindung auf eine Fräse angewandt wird, umfasst das Vorgeben eines Typs der Straßenbaumaschine das Vorgeben eines Typs der Fräse. Wenn die Erfindung auf eine Walze angewandt wird, umfasst das Vorgeben eines Typs der Straßenbaumaschine das Vorgeben eines Typs der Walze.

Das Eigenschaftsprofil kann basierend auf der Vorgabe des Typs der Straßenbaumaschine aus einer Mehrzahl von gespeicherten Eigenschaftsprofilen für unterschiedliche Typen der Straßenbaumaschine ausgewählt werden. So lässt sich basierend auf einer Vorgabe der für den Einbaueinsatz vorgesehenen Straßenbaumaschine ein geeignetes Eigenschaftsprofil auswählen. Es ist auch möglich, den Einbaudatensatz mittels der Recheneinheit mit mehreren Eigenschaftsprofilen abzugleichen, welche zu unterschiedlichen Typen der Straßenbaumaschine korrespondieren. So kann festgestellt werden, welche Straßenbaumaschine für den Einbaueinsatz geeignet wäre.

Alternativ kann in dem Profilspeicher auch nur ein einzelnes Eigenschaftsprofil gespeichert sein, welches zu einem bestimmten Typ der Straßenbaumaschine korrespondiert.

Es wäre insbesondere denkbar, dass der Profilspeicher mehrere Eigenschaftsprofile umfasst, welche Straßenfertigertypen betreffen, die jeweils dasselbe Zugfahrzeug, aber unterschiedliche Bohlenkonfigurationen aufweisen. Wenn die Recheneinheit und der Profilspeicher auf dem Straßenfertiger angeordnet sind, kann es zweckmäßig sein, dass der Profilspeicher nur Eigenschaftsprofile enthält, welche die Zugmaschine des betreffenden Straßenfertigers betreffen.

Ein Ergebnis der Beurteilung, ob die Straßenbaumaschine zum Einbau des Fahrbahnbelags geeignet ist, kann ausgegeben werden. Insbesondere kann das Ergebnis der Beurteilung in einer Displayeinheit angezeigt werden.

Im Folgenden wird die Erfindung anhand vom Ausführungsbeispielen weiter erläutert. Dabei zeigt:
- Fig. 1: eine schematische Seitenansicht einer als Straßenfertiger ausgebildeten Straßenbaumaschine gemäß einer Ausführungsform;
- Fig. 2: eine schematische Darstellung eines Plausibilisierungsverfahrens gemäß einer Ausführungsform; und
- Fig. 3: eine schematische Darstellung einer Plausibilisierungseinheit gemäß einer Ausführungsform.

Die nachfolgend beschriebenen Ausführungsformen betreffen die Anwendung der Erfindung auf einen Straßenfertiger. Wie oben beschreiben, kann die Erfindung aber auch auf andere Straßenbaumaschinen angewandt werden, wie beispielsweise auf einen Grader, auf eine Fräse oder auf eine Walze.

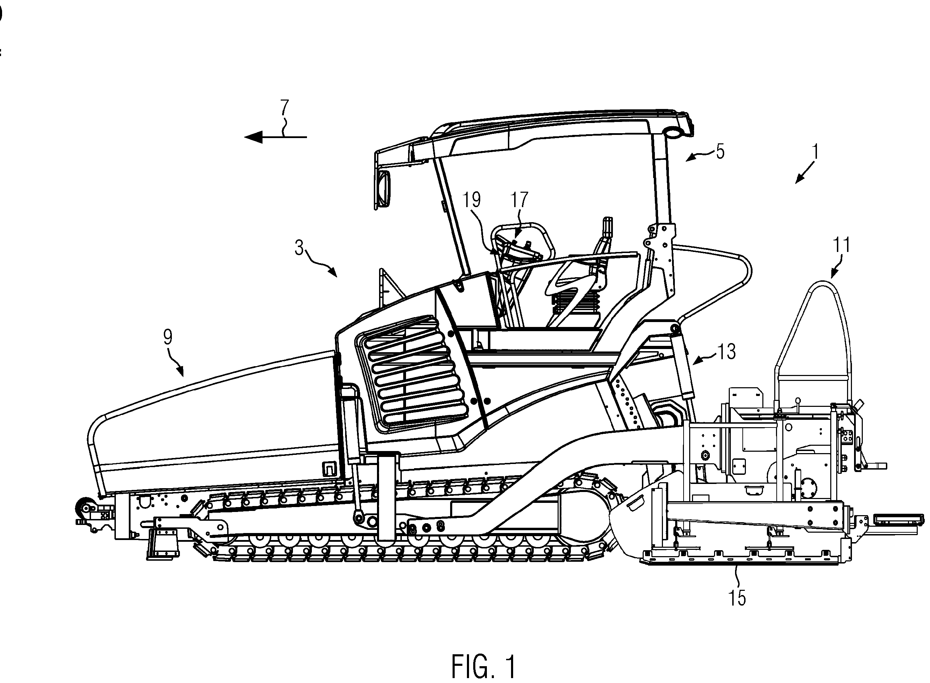

Figur 1 zeigt eine schematische Darstellung eines Straßenfertigers 1 zum Einbau eines Fahrbahnbelags. Der Straßenfertiger 1 umfasst ein Zugfahrzeug 3, an dem ein Bedienstand 5 für eine Bedienperson vorgesehen ist. Das Zugfahrzug 3 umfasst in Einbaufahrtrichtung 7 vorne einen Gutbunker 9 zur Aufnahme von Einbaugut. Das Einbaugut wird entgegen der Fahrtrichtung 7 mittels einer Fördereinrichtung vor eine Einbaubohle 11 des Straßenfertigers 1 gefördert. Die Einbaubohle 11 ist an dem Zugfahrzeug 3 angebracht und wird hinter dem Zugfahrzeug 3 hergezogen. Die Einbaubohle 11 liegt während eines Einbauvorgangs schwimmend auf dem Einbaugut auf und verdichtet das Einbaugut. Ein Anstellwinkel der Einbaubohle 11 lässt sich mittels einer Anstellvorrichtung 13 anpassen. Die Einbaubohle 11 umfasst ein Glättblech 15 sowie Verdichtungsaggregate zum Verdichten des Einbauguts. Die Verdichtungsaggregate umfassen beispielsweise einen Stampfer (Tamper) und eine Pressleiste. Die Einbaubohle 11 umfasst eine Heizeinrichtung. Bei der Einbaubohle 11 kann es sich um eine seitliche ausfahrbare Einbaubohle 11 handeln, mit welcher die Einbaubreite angepasst werden kann. Die Einbaubohle 11 kann ein oder mehrere Bohlenteile umfassen.

Auf dem Hauptbedienstand ist eine Bedienkonsole 17 vorgesehen, welche Bedienelemente aufweist, mit denen eine Bedienperson Funktionen des Straßenfertigers 1 steuern kann. Die Bedienkonsole 17 weist vorzugsweise auch eine Anzeigeeinrichtung auf, beispielsweise in Form eines Bildschirms. Der Straßenfertiger 1 umfasst einen Bordcomputer 19, welcher in der dargestellten Ausführungsform in die Bedienkonsole 17 integriert ist, aber auch anderweitig am Straßenfertiger 1 vorgesehen sein könnte.

Vor Beginn des Einbauvorgangs wird in einem Vermessungs- oder Konstruktionsprozess ein Solldatensatz erstellt. Hierbei können beispielsweise Kartendaten, Daten aus einem Navigationssystem und/oder Landschaftsbilder verwendet werden. Der Solldatensatz beschreibt den einzubauenden Fahrbahnbelag. Insbesondere beschreibt der Solldatensatz einen Verlauf und eine Geometrie des einzubauenden Fahrbahnbelags. Der Solldatensatz kann beispielsweise das zur verwendende Einbaugut spezifizieren und eine oder mehrere Qualitätsanforderungen an den Fahrbahnbelag angeben, wie beispielsweise eine minimale Verdichtung.

Ebenfalls vor Beginn des Einbauprozesses wird ein Parametersatz mit Einstellungen von Betriebsparametern des Straßenfertigers 1 erstellt. Der Parametersatz kann im Hinblick auf den Solldatensatz oder basierend auf dem Solldatensatz erstellt werden. Der Parametersatz kann Einstellungen von Betriebsparametern des Straßenfertigers 1 umfassen. Der Parametersatz kann beispielsweise Einstellungen für folgende Betriebsparameter des Straßenfertigers 1 umfassen: eine Einbaugeschwindigkeit des Straßenfertigers 1, einen Hub eines Stampfers der Einbaubohle 11, eine Drehzahl eines Stampfers der Einbaubohle 11, einen Vibrationsdruck, eine Vibrationsdrehzahl, einen Pressleistendruck, eine Pressleistenfrequenz, eine Temperatur der Einbaubohle 11, einen Anstellwinkel der Einbaubohle 11, eine Ausziehbreite der Einbaubohle 11, eine Mischguttemperatur, einen Mischguttransportparameter.

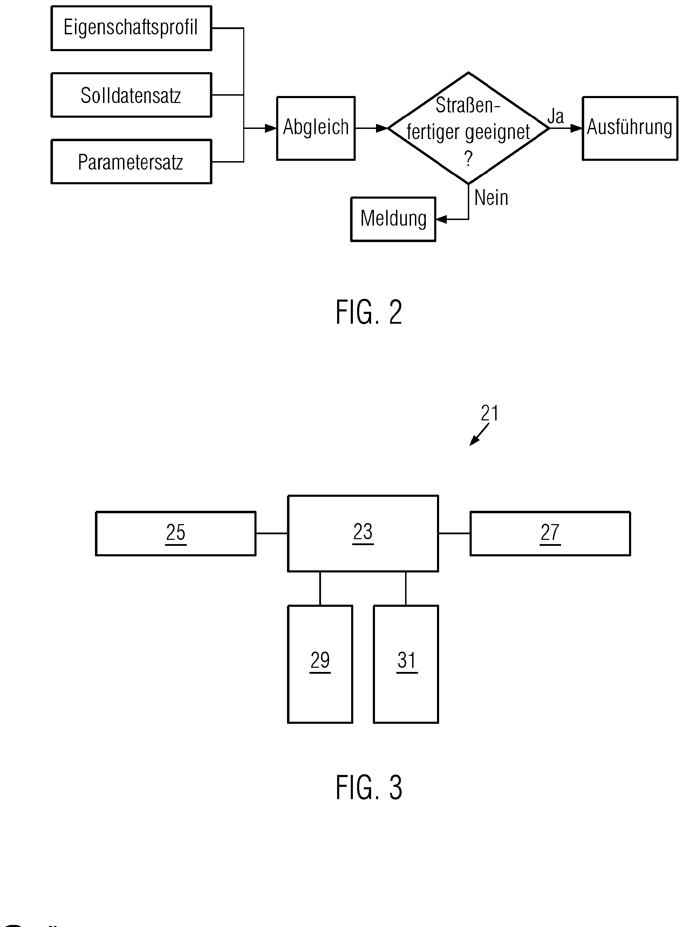

In einem Planungsprozess wird außer dem Erstellen des Solldatensatzes und des Parametersatzes noch der Straßenfertiger 1 festgelegt, der für den Einbauvorgang verwendet werden soll. Vor Beginn des Einbauvorgangs wird plausibilisiert, ob der Straßenfertiger 1 für den Einbau des Fahrbahnbelags geeignet ist. Figur 2 zeigt schematisch ein entsprechendes Plausibilisierungsverfahren. Basierend auf der Vorgabe oder Auswahl des Straßenfertigers 1 wird auf ein gespeichertes Eigenschaftsprofil des Straßenfertigers 1 zugegriffen. Das Eigenschaftsprofil des Straßenfertigers 1 beschreibt für den Einsatz relevante Eigenschaften des Straßenfertigers 1, wie beispielsweise: eine kleinstmögliche (minimale) Arbeitsbreite des Straßenfertigers 1, eine größtmögliche (maximale) Arbeitsbreite des Straßenfertigers 1, eine maximale Verstellgeschwindigkeit der Arbeitsbreite des Straßenfertigers 1, eine maximale Einbaugeschwindigkeit des Straßenfertigers 1, eine maximale Fördermenge von Einbaumaterial im Straßenfertiger 1 pro Zeiteinheit, eine maximal erreichbare Verdichtung des Einbaumaterials durch den Straßenfertiger 1, eine kleinstmögliche (minimale) Einbaustärke bei Verwendung des Straßenfertigers 1, eine größtmögliche (maximale) Einbaustärke bei Verwendung des Straßenfertigers 1.

Der Solldatensatz und der Parametersatz werden mit dem Eigenschaftsprofil abgeglichen. Basierend auf einem Ergebnis des Abgleichs wird beurteilt, ob der Straßenfertiger 1 für das Durchführen des Einbauvorgangs zum Einbau des Fahrbahnbelags gemäß dem Solldatensatz und unter Verwendung des Parametersatzes geeignet ist. Ergibt diese Beurteilung, dass der Straßenfertiger 1 nicht geeignet ist, wird eine entsprechende Meldung ausgegeben. Die Planung des Einbaus kann dann rechtzeitigt vor Einbaubeginn noch einmal überarbeitet werden. Beispielsweise können Eigenschaften des einzubauenden Fahrbahnbelags, der Parametersatz oder die Auswahl des Straßenfertigers 1 überarbeitet werden.

In dem Fall, dass die Beurteilung ergibt, dass er Straßenfertiger 1 für den Einbauvorgang geeignet ist, kann mit dem Einbauvorgang begonnen werden. Falls noch nicht geschehen, werden der Solldatensatz und der Parametersatz in den Bordcomputer 19 des Straßenfertigers 1 eingelesen. Während des Einbauvorgangs werden dann die Arbeitskomponenten des Straßenfertigers 1 basierend auf den eingelesenen Daten (Solldatensatz und Parametersatz) angesteuert. Dies kann einerseits automatisiert erfolgen, beispielsweise durch den Bordcomputer 19 des Straßenfertigers 1, oder manuell durch eine Bedienperson. Beispielsweise könnten der Bedienperson basierend auf dem Solldatensatz und dem Parametersatz Anweisungen auf dem Bildschirm der Bedienkonsole 17 angezeigt werden und die Bedienperson könnte basierend auf diesen Anweisungen die Arbeitskomponenten des Straßenfertigers 1 steuern.

In der beschriebenen Ausführungsform werden sowohl der Solldatensatz als auch der Parametersatz mit dem Eigenschaftsprofil abgeglichen. Dies ist aber nicht zwingend erforderlich. Es könnte auch lediglich der Solldatensatz mit dem Eigenschaftsprofil abgeglichen werden, oder lediglich der Parametersatz mit Eigenschaftsprofil abgeglichen werden. Ebenso werden gemäß der beschriebenen Ausführungsform sowohl der Solldatensatz als auch der Parametersatz in den Bordcomputer 19 des Straßenfertigers 1 eingelesen und dem Ansteuern der Arbeitskomponenten des Straßenfertigers 1 zugrunde gelegt. Alternativ könnte jedoch auch nur der Solldatensatz oder nur der Parametersatz in den Bordcomputer 19 des Straßenfertigers 1 eingelesen werden und dem Einbauvorgang zugrunde gelegt werden.

Figur 3 zeigt in schematischer Darstellung eine Ausführungsform einer Plausibilisierungseinheit 21, welche den Abgleich des Solldatensatzes und/oder des Parametersatzes (Einbaudatensatz) mit dem Eigenschaftsprofil des Straßenfertigers 1 durchführt. Die Plausibilisierungseinheit 21 führt vorzugsweise auch die Beurteilung durch, ob der Straßenfertiger 1 zum Einbau des Fahrbahnbelags geeignet ist. Die Plausibilisierungseinheit 21 umfasst eine Recheneinheit 23 mit einem Dateneingang 25 und einem Datenausgang 27. Außerdem umfasst die Plausibilisierungseinheit 21 einen Profilspeicher 29 und einen Speicher 31.

Die Plausibilisierungseinheit 21 kann auf dem Straßenfertiger 1 vorgesehen sein. Beispielsweise kann die Plausibilisierungseinheit 21 Teil des Bordcomputers 19 des Straßenfertigers 1 sein oder mit dem Bordcomputer 19 des Straßenfertigers 1 in Kommunikationsverbindung stehen. Alternativ kann die Plausibilisierungseinheit 21 vollständig oder teilweise separat von dem Straßenfertiger 1 vorgesehen sein, beispielsweise in einer Planungszentrale oder in einer mobilen Einheit.

Über den Dateneingang 25 werden der Plausibilisierungseinheit 21 der Solldatensatz und der Parametersatz zur Verfügung gestellt. In dem Fall, dass die Plausibilisierungseinheit 21 auf dem Straßenfertiger 1 vorgesehen ist, müssen der Solldatensatz und der Parametersatz nur einmal eingelesen werden und können dann sowohl dem Bordcomputer 19 als auch der Plausibilisierungseinheit 21 zur Verfügung gestellt werden.

In dem Profilspeicher 29 ist zumindest ein Eigenschaftsprofil für einen Straßenfertiger 1 gespeichert. Wenn in dem Profilspeicher 29 mehrere unterschiedliche Eigenschaftsprofile gespeichert sind, kann über den Dateneingang 25 eine Auswahl eines Straßenfertigertyps empfangen werden. Basierend auf der Auswahl des Straßenfertigertyps kann ein dem entsprechenden Straßenfertigertyp zugeordnetes Eigenschaftsprofil aus dem Profilspeicher 29 verwendet werden. Ist nur ein einziges Eigenschaftsprofil in dem Profilspeicher 29 gespeichert, ist keine Auswahl eines Straßenfertigertyps erforderlich. Das System wäre in diesem Fall fest auf einen Straßenfertigertyp eingestellt. Dies ist besonders zweckmäßig, wenn die Plausibilisierungseinheit 21 auf dem Straßenfertiger 1 des entsprechenden Typs vorgesehen ist.

Gemäß einer Ausführungsform ist der Speicher 31 als Regelspeicher ausgebildet. Die Recheneinheit 23 Zugriff auf den Regelspeicher 31, welcher Regeln speichert, gemäß denen die Recheneinheit 23 den Abgleich des Solldatensatzes und/oder des Parametersatzes mit dem Eigenschaftsprofil durchführt. Beim Abgleichen werden aus dem Solldatensatz und/oder dem Parametersatz vorzugsweise ein oder mehrere Vergleichswerte bestimmt, welche mit einem oder mehreren Eigenschaftswerten aus dem Eigenschaftsprofil des Straßenfertigers 1 verglichen werden. Auch die auf dem Ergebnis des Abgleichs beruhende Beurteilung, ob der Straßenfertiger 1 zum Einbau des Fahrbahnbelags geeignet ist, erfolgt gemäß in dem Regelspeicher 31 abgelegten Regeln. Das Ergebnis der Beurteilung wird über den Datenausgang 27 ausgegeben und kann beispielsweise an einem Bildschirm angezeigt werden. Wenn die Plausibilisierungseinheit 21 auf dem Straßenfertiger 1 vorgesehen ist, kann das Ergebnis der Beurteilung beispielsweise auf einem Bildschirm der Bedienkonsole 17 ausgegeben werden.

Gemäß einer alternativen Ausführungsform ist der Speicher 31 als Speicher 31 ausgebildet, welcher Programminstruktionen zum Durchführen einer Simulation speichert. In dieser Ausführungsform erfolgt das Abgleichen des Einbaudatensatzes mit dem Eigenschaftsprofil des Straßenfertigers 1 mittels einer Simulation des Einbauvorgangs des Fahrbahnbelags mit dem Straßenfertiger 1 und entsprechend dem Einbaudatensatz. Die Simulation verwendet einen Digital Twin des Straßenfertigers 1 und greift zur Beschreibung des Straßenfertigers 1 auf das Eigenschaftsprofil des Straßenfertigers 1 zurück. Basierend auf der Simulation wird festgestellt, ob der simulierte Einbauvorgang erfolgreich war. Der simulierte Einbauvorgang wird erfolgreich bestimmt, wenn während des simulierten Einbauvorgangs keine Fehler aufgetreten sind und/oder der in der Simulation eingebaute Fahrbahnbelag den Vorgaben entspricht. Die Vorgaben können insbesondere aus dem Einbaudatensatz hervorgehen. Wenn bestimmt wird, dass der simulierte Einbauvorgang erfolgreich war, wird bestimmt, dass der Straßenfertiger zum Einbau des Fahrbahnbelags geeignet ist. Andernfalls wird bestimmt, dass der Straßenfertiger zum Einbau des Fahrbahnbelags nicht geeignet ist. Das Ergebnis der Beurteilung, ob der Straßenfertiger 1 zum Einbau des Fahrbahnbelags geeignet ist, wird über den Datenausgang 27 ausgegeben und kann beispielsweise an einem Bildschirm angezeigt werden. Wenn die Plausibilisierungseinheit 21 auf dem Straßenfertiger 1 vorgesehen ist, kann das Ergebnis der Beurteilung beispielsweise auf einem Bildschirm der Bedienkonsole 17 ausgegeben werden.

## Patentansprüche

1. Verfahren zum Einbau eines Fahrbahnbelags, umfassend:
Einlesen eines Einbaudatensatzes in einen Bordcomputer (19) einer Straßenbaumaschine (1), bei der es sich insbesondere um einen Straßenfertiger handelt; und
während eines Einbauvorgangs: Ansteuern von Arbeitskomponenten der Straßenbaumaschine (1) zum Einbau des Fahrbahnbelags basierend auf dem eingelesenen Einbaudatensatz,
**dadurch gekennzeichnet, dass** vor Beginn des Einbauvorgangs der Einbaudatensatz mittels einer Recheneinheit (23) mit einem in einem Profilspeicher (29) gespeicherten Eigenschaftsprofil der Straßenbaumaschine (1) abgeglichen wird und basierend auf einem Ergebnis des Abgleichs beurteilt wird, ob die Straßenbaumaschine (1) zum Einbau des Fahrbahnbelags geeignet ist.

2. Verfahren nach Anspruch 1, wobei das Abgleichen des Einbaudatensatzes mit dem Eigenschaftsprofil der Straßenbaumaschine (1) durch die Recheneinheit (23) gemäß Regeln erfolgt, welche in einem Regelspeicher (31) gespeichert sind.

3. Verfahren nach Anspruch 1 oder 2, wobei das Abgleichen des Einbaudatensatzes mit dem Eigenschaftsprofil der Straßenbaumaschine (1) ein Ermitteln zumindest eines Vergleichswerts aus dem Einbaudatensatz umfasst, wobei der zumindest eine Vergleichswert mit dem Eigenschaftsprofil der Straßenbaumaschine (1) abgeglichen wird.

4. Verfahren nach Anspruch 1, wobei das Abgleichen des Einbaudatensatzes mit dem Eigenschaftsprofil der Straßenbaumaschine mittels einer Simulation erfolgt, welche vorzugsweise ein Simulieren des Einbauvorgangs des Fahrbahnbelags mit der Straßenbaumaschine und entsprechend dem Einbaudatensatz umfasst.

5. Verfahren nach Anspruch 4, wobei die Simulation einen Digital Twin der Straßenbaumaschine verwendet.

6. Verfahren nach einem der vorangehenden Ansprüche, wobei die Arbeitskomponenten der Straßenbaumaschine (1) basierend auf dem eingelesenen Einbaudatensatz automatisch angesteuert werden.

7. Verfahren nach einem der vorangehenden Ansprüche, wobei der Einbaudatensatz einen Solldatensatz umfasst, welcher den einzubauenden Fahrbahnbelag charakterisiert.

8. Verfahren nach Anspruch 7, wobei der Solldatensatz zumindest teilweise auf zumindest einem von Folgendem basierend erstellt wird: einem Vermessungsprozess, einem Konstruktionsprozess, Kartendaten, Daten aus einem Navigationssystem, Landschaftsbilder.

9. Verfahren nach Anspruch 7 oder 8, wobei der Solldatensatz zumindest eines von Folgendem definiert: eine Geometrie des einzubauenden Fahrbahnbelags, zumindest eine Eigenschaft des Einbaumaterials, zumindest eine Qualitätsanforderung.

10. Verfahren nach einem der vorangehenden Ansprüche, wobei der Einbaudatensatz einen Parametersatz mit Einstellungen von Betriebsparametern der Straßenbaumaschine (1) umfasst.

11. Verfahren nach Anspruch 10, wobei der Parametersatz eine Einstellung für einen oder mehrere der folgenden Betriebsparameter umfasst: eine Einbaugeschwindigkeit des Straßenfertigers (1), einen Hub eines Stampfers einer Einbaubohle (11) des Straßenfertigers (1), eine Drehzahl eines Stampfers einer Einbaubohle (11) des Straßenfertigers (1), einen Vibrationsdruck, eine Vibrationsdrehzahl, einen Pressleistendruck, eine Pressleistenfrequenz, eine Temperatur einer Einbaubohle (11) des Straßenfertigers (1), einen Anstellwinkel einer Einbaubohle (11) des Straßenfertigers (1), eine Ausziehbreite einer Einbaubohle (11) des Straßenfertigers (1), eine Mischguttemperatur, einen Mischguttransportparameter.

12. Verfahren nach einem der vorangehenden Ansprüche, wobei die Recheneinheit (23) und/oder der Profilspeicher (29) auf der Straßenbaumaschine (1) vorgesehen ist.

13. Verfahren nach einem der vorangehenden Ansprüche, wobei die Recheneinheit (23) und/oder der Profilspeicher (29) separat von der Straßenbaumaschine (1) vorgesehen ist.

14. Verfahren nach einem der vorangehenden Ansprüche, wobei ein Typ der Straßenbaumaschine vorgegeben wird und das Eigenschaftsprofil basierend auf der Vorgabe des Typs der Straßenbaumaschine aus einer Mehrzahl von gespeicherten Eigenschaftsprofilen für unterschiedliche Typen ausgewählt wird.

15. Verfahren nach einem der vorangehenden Ansprüche, wobei ein Ergebnis der Beurteilung, ob die Straßenbaumaschine (1) zum Einbau des Fahrbahnbelags geeignet ist, ausgegeben wird.

## Claims

1. Method for paving a road surface, comprising:
reading-in a paving data set into an on-board computer (19) of a road construction machine (1), which is in particular a road paver; and
during a paving operation: controlling working components of the road construction machine (1) for paving the road surface based on the read-in paving data set,
**characterized in that,** before start of the paving operation, the paving data set is compared by means of a computing unit (23) with a property profile of the road construction machine (1) stored in a profile memory (29) and, based on a result of the comparison, an assessment is made as to whether the road construction machine (1) is suitable for paving the road surface.

2. Method according to claim 1, wherein the comparing of the paving data set with the property profile of the road construction machine (1) is performed by the computing unit (23) according to rules which are stored in a rule memory (31).

3. Method according to claim 1 or 2, wherein the comparing of the paving data set with the property profile of the road construction machine (1) comprises determining at least one comparison value from the paving data set, wherein the at least one comparison value is compared with the property profile of the road construction machine (1).

4. Method according to claim 1, wherein the comparing of the paving data set with the property profile of the road construction machine is performed by means of a simulation, which preferably comprises simulating the paving process of the road surface with the road construction machine and according to the paving data set.

5. Method according to claim 4, wherein the simulation uses a Digital Twin of the road construction machine.

6. Method according to one of the preceding claims, wherein the working components of the road construction machine (1) are automatically controlled based on the read-in paving data set.

7. Method according to one of the preceding claims, wherein the paving data set comprises a target data set characterizing the road surface to be paved.

8. Method according to claim 7, wherein the target data set is created based at least in part on at least one of: a measuring process, a construction process, map data, data from a navigation system, landscape images.

9. Method according to claim 7 or 8, wherein the target data set defines at least one of the following: a geometry of the road surface to be paved, at least one property of the paving material, at least one quality requirement.

10. Method according to one of the preceding claims, wherein the paving data set comprises a parameter set with settings of operating parameters of the road construction machine (1).

11. Method of claim 10, wherein the parameter set comprises a setting for one or a plurality of the following operating parameters: a paving speed of the road paver (1), a stroke of a tamper of a paving screed (11) of the road paver (1), a rotational speed of a tamper of a paving screed (11) of the road paver (1), a vibration pressure, a vibration rotational speed, a pressing bar pressure, a pressing bar frequency, a temperature of a paving screed (11) of the road paver (1), an angle of attack of a paving screed (11) of the road paver (1), an extension width of a paving screed (11) of the road paver (1), a mixed material temperature, a mixed material transport parameter.

12. Method according to one of the preceding claims, wherein the computing unit (23) and/or the profile memory (29) is provided on the road construction machine (1).

13. Method according to one of the preceding claims, wherein the computing unit (23) and/or the profile memory (29) is provided separately from the road construction machine (1).

14. Method according to one of the preceding claims, wherein a type of the road construction machine is indicated and the property profile is selected from a plurality of stored property profiles for different types based on the indication of the type of road construction machine.

15. Method according to one of the preceding claims, wherein a result of the assessment of whether the road construction machine (1) is suitable for paving the road surface is output.

## Revendications

1. Procédé d'installation d'un revêtement de chaussée, comprenant les étapes consistant à :
lire un ensemble de données d'installation dans un ordinateur de bord (19) d'un engin de construction routière (1), qui est en particulier un finisseur routier ; et
pendant une opération d'installation : commander des composants de travail de l'engin de construction routière (1) pour l'installation du revêtement de chaussée sur la base de l'ensemble de données d'installation lu,
**caractérisé en ce qu**'avant le début de l'opération d'installation, l'ensemble de données d'installation est aligné à un profil de propriétés de l'engin de construction routière (1) stocké dans une mémoire de profils (29) au moyen d'une unité de calcul (23) et, sur la base d'un résultat de l'alignement, l'engin de construction routière (1) est évalué comme étant approprié ou non pour l'installation du revêtement de chaussée.

2. Procédé selon la revendication 1, dans lequel l'alignement de l'ensemble de données d'installation avec le profil de propriétés de l'engin de construction routière (1) est effectué par l'unité de calcul (23) conformément à des règles qui sont stockées dans une mémoire de règles (31).

3. Procédé selon la revendication 1 ou 2, dans lequel l'alignement de l'ensemble de données d'installation avec le profil de propriétés de l'engin de construction routière (1) comprend une détermination d'au moins une valeur de comparaison à partir de l'ensemble de données d'installation, dans lequel la au moins une valeur de comparaison est alignée avec le profil de propriétés de l'engin de construction routière (1).

4. Procédé selon la revendication 1, dans lequel l'alignement de l'ensemble de données d'installation avec le profil de propriétés de l'engin de construction routière s'effectue au moyen d'une simulation, qui comprend de préférence une simulation de l'opération d'installation du revêtement de chaussée avec l'engin de construction routière et correspondant à l'ensemble de données d'installation.

5. Procédé selon la revendication 4, dans lequel la simulation utilise un jumeau numérique de l'engin de construction routière.

6. Procédé selon l'une quelconque des revendications précédentes, dans lequel les composants de travail de l'engin de construction routière (1) sont commandés automatiquement sur la base de l'ensemble de données d'installation lu.

7. Procédé selon l'une quelconque des revendications précédentes, dans lequel l'ensemble de données d'installation comprend un ensemble de données de consigne qui caractérise le revêtement de chaussée à installer.

8. Procédé selon la revendication 7, dans lequel l'ensemble de données de consigne est au moins en partie établi sur la base d'au moins l'un des éléments suivants : un processus de mesure, un processus de construction, des données de carte, des données provenant d'un système de navigation, des images de paysage.

9. Procédé selon la revendication 7 ou 8, dans lequel l'ensemble de données de consigne définit au moins l'un des éléments suivants : une géométrie du revêtement de chaussée à installer, au moins une propriété du matériau d'installation, au moins une exigence de qualité.

10. Procédé selon l'une quelconque des revendications précédentes, dans lequel l'ensemble de données d'installation comprend un ensemble de paramètres avec des réglages de paramètres de fonctionnement de l'engin de construction routière (1).

11. Procédé selon la revendication 10, dans lequel l'ensemble de paramètres comprend un réglage pour un ou plusieurs des paramètres de fonctionnement suivants : une vitesse d'installation du finisseur routier (1), une course d'un pilon d'une poutre lisseuse (11) du finisseur routier (1), une vitesse de rotation d'un pilon d'une poutre lisseuse (11) du finisseur routier (1), une pression de vibration, une vitesse de rotation de vibration, une pression de barre de pressage, une fréquence de barre de pressage, une température d'une poutre lisseuse (11) du finisseur routier (1), un angle d'incidence d'une poutre lisseuse (11) du finisseur routier (1), une largeur d'extension d'une poutre lisseuse (11) du finisseur routier (1), une température de mélange, un paramètre de transport de mélange.

12. Procédé selon l'une quelconque des revendications précédentes, dans lequel l'unité de calcul (23) et/ou la mémoire de profils (29) est/sont prévue(s) sur l'engin de construction routière (1).

13. Procédé selon l'une quelconque des revendications précédentes, dans lequel l'unité de calcul (23) et/ou la mémoire de profils (29) est/sont prévue(s) à l'écart de l'engin de construction routière (1).

14. Procédé selon l'une quelconque des revendications précédentes, dans lequel un type de l'engin de construction routière est prédéterminé et le profil de propriétés est sélectionné parmi une pluralité de profils de propriétés stockés pour différents types sur la base de la spécification du type d'engin de construction routière.

15. Procédé selon l'une quelconque des revendications précédentes, dans lequel un résultat de l'évaluation est délivré en sortie pour savoir si l'engin de construction routière (1) est approprié ou non pour l'installation du revêtement de chaussée.
